# EUROPEAN PATENT APPLICATION

(11) **EP 4 567 000 A1**
(43) Date of publication of application: **11.06.2025**
(21) Application number: 24217514.9
(22) Date of filing: 04.12.2024
(51) Int. Cl.: C01G 53/82, H01M 4/00

(54) **MANUFACTURING METHOD OF CATHODE ACTIVE MATERIAL AND CATHODE ACTIVE MATERIAL MANUFACTURED THEREFROM**

(30) Priority: 05.12.2023 KR 20230174720
(71) Applicant: Korea Atomic Energy Research Institute, Daejeon 34057 (KR)
(72) Inventor: Kim, Hyungsub, 30141 Sejong-si (KR); Song, Seok Hyun, 34057 Daejeon (KR); Kim, Kyoung-Sun, 27425 Chungcheongbuk-du (KR)
(74) Representative: Treeby, Philip David William

(57) **Abstract**

The present disclosure relates to the synthesis of a cathode active material including a compound represented by Chemical Formula 1, wherein the cathode active material has lithium-concentration gradient particles according to the control of the flow rate of air gas instead of high-concentration oxygen gas, the synthesis temperature and the control of lithium content. By using an excess amount of lithium and a low oxygen partial pressure at a low synthesis temperature, secondary particles having a lithium concentration gradient form, in which the overall structure is stoichiometric but Li is gradually contained in excess from the core to the surface are formed, thereby exhibiting a high capacity while suppressing deterioration due to the lithium-excess Ni-rich layered cathode active material in the shell part to show stable electrochemical performance.

## Description

### CROSS-REFERENCE TO RELATED APPLICATION(S)

This application claims priority to and the benefit of Korean Patent Application No. 10-2023-0174720, filed on December 5, 2023, the disclosure of which is incorporated herein by reference in its entirety.

### TECHNICAL FIELD

The present disclosure relates to a method for manufacturing a cathode active material and a cathode active material manufactured therefrom.

### RELATED ART

Lithium secondary batteries are used in various fields such as mobile devices, energy storage systems and electric vehicles due to their high energy density and voltage, long cycle life and low self-discharge rate. The core materials of such lithium secondary batteries are a cathode material, an anode material, an electrolyte and a separator. Recently, the importance of cathode active materials of lithium secondary batteries to drive electric vehicles has been increasing due to the expansion of demand for electric vehicles.

The cathode active materials can be classified into LCO, NCM, NCA, LMO and LFP depending on the materials they are composed of, and Ni-based layered cathode active materials such as LiNiₓCo_{y}Mn_{z}O₂ and LiNiₓCo_{y}Al_{z}O₂, which have the same structure as LCO, are mainly used as cathode active materials for secondary batteries for application to medium and large-sized electronic devices. The Ni-based layered cathode active materials have the advantage of reducing costs by replacing some of the expensive cobalt with nickel, and increasing the reversible capacity of lithium secondary batteries due to their high energy density and relatively long lifespan.

However, despite the excellent electrical/chemical properties of such high-concentration Ni-based (Ni-rich) layered cathode active materials, since the nickel oxidation number should be closer to trivalent than other layered cathode active materials, it is structurally unstable and tends to maintain a stable divalent oxidation number, thereby making synthesis difficult. Therefore, the importance of optimal synthesis temperature and lithium content along with high oxygen partial pressure has been emphasized when manufacturing Ni-rich layered cathode active materials.

When manufacturing Ni-rich layered cathode active materials, since they are manufactured under a highly oxidizing atmosphere, the consumption of high-concentration oxygen (99.95 to 99.999%) is large (approximately 400 to 500 cc/min), which may increase the manufacturing cost. In addition, an excessively high synthesis temperature may cause Li/O loss on the surface, thereby forming a deteriorated structure such as NiO. Likewise, insufficient lithium content may form a Li-poor structure on the surface if it is insufficient, and may form residual lithium compounds on the surface if it is excessive, which may cause side reactions and performance degradation.

Accordingly, in previous studies, there have been attempts to synthesize Ni-rich materials using air gas instead of high-concentration oxygen, but there are problems such as increased cation mixing by Ni²⁺ and formation of impurities as the oxygen partial pressure decreases, resulting in electrochemical performance that is inferior to that of using high-concentration oxygen gas.

In addition, as a method for improved electrochemical characteristics, a method has been reported in which a core-shell structure is synthesized by placing a high-NCM material (NCM111, 523, etc.) with a low nickel oxidation number on the surface and a Ni-rich layered cathode active material with a high nickel oxidation number on the core side to suppress the deterioration of a surface structure due to the instability of Ni³⁺ cations, or a method has been reported in which a Li-excess structure is formed through a high-purity oxygen atmosphere, low synthesis temperature and high lithium content conditions during the synthesis of a Ni-rich layered cathode active material, thereby increasing the stability of a Ni-rich layered cathode active material by the effect of inactive lithium doping in the transition metal layer. However, there is a problem in that the core-shell inevitably leads to a decrease in capacity because the oxidation number of nickel decreases, and the Li-excess Ni-rich material inevitably leads to an excess of lithium in the transition metal layer instead of the transition metal.

Therefore, the development of a Ni-rich cathode active material with excellent capacity characteristics and improved stability while reducing the cost in the manufacturing process is still necessary.

### SUMMARY

One of the several objects of the present disclosure is to provide a method for manufacturing a cathode active material that is capable of improving the capacity characteristics of a secondary battery and a cathode active material manufactured therefrom.

One of the several objects of the present disclosure is to provide a method for manufacturing a cathode active material that is capable of improving the cycle performance of a secondary battery and a cathode active material manufactured therefrom.

One of the several objects of the present disclosure is to provide a method for manufacturing a cathode active material that is capable of increasing the stability of a secondary battery cathode and a cathode active material manufactured therefrom.

One of the several objects of the present disclosure is to provide a method for manufacturing a cathode active material that is capable of reducing the cost in the manufacturing process and a cathode active material manufactured therefrom.

The present disclosure has been devised to solve the above problems, and an embodiment of the present disclosure may provide a method for manufacturing a cathode active material, the method including: step 1 of preparing a mixture of a lithium precursor compound and a metal hydroxide; and step 2 of sintering the mixture to prepare a sintered body, wherein a shell part of the sintered body includes a compound represented by Chemical Formula 1 below, and wherein a concentration of lithium in the shell part is higher than a concentration of lithium in a core part of the sintered body:

[Chemical Formula 1] Li₁₊ₓ₁(Niₐ₁Co_{b1}Mn_{c1})₁₋ₓ₁O₂

wherein in Chemical Formula 1 above, x1, a1, b1 and c1 are real numbers satisfying -0.05 ≤ x1 ≤ 0.2, 0.6 ≤ a1 ≤ 1.0, 0 ≤ b1 ≤ 0.3, and 0 ≤ c1 ≤ 0.4, respectively.

In this case, step 1 may be a step of mixing a metal hydroxide and a lithium precursor compound in a molar ratio of 1:0.9 to 1.5.

In addition, the lithium precursor compound may further include one or more molten salts selected from the group consisting of LiNO₃, Li₂SO₄, Li₂CO₃, LiCl, LiI and LiBr.

Meanwhile, step 2 may be performed at a temperature of 600°C or higher and/or 900°C or lower.

In this case, step 2 may be performed under an air atmosphere.

In addition, step 2 may be performed for 8 hours or more and/or 24 hours or less at an air inflow rate of 0 sccm or more and/or 600 sccm or less.

In an embodiment of the present disclosure, the core part of the sintered body may include a compound represented by Chemical Formula 2 below:

[Chemical Formula 2] Li₁₋ₓ₂(Niₐ₂CO_{b2}Mn_{c2})₁₊ₓ₂O₂

wherein in Chemical Formula 2 above, x2, a2, b2 and c2 are real numbers satisfying -0.2 ≤ x2 ≤ 0.05, 0.6 ≤ a2 ≤ 1.0, 0 ≤ b2 ≤ 0.3, and 0 ≤ c2 ≤ 0.4, respectively.

In one example, the content of lithium may have a concentration gradient that continuously increases from the core part of the sintered body to a surface of the shell part.

In another example, an oxidation number of nickel in the shell part may be higher than an oxidation number of nickel (Ni) in the core part of the sintered body.

In another embodiment of the present disclosure, the present disclosure may provide a cathode active material, including: a shell part represented by Chemical Formula 1 below; and a core part represented by Chemical Formula 2 below, wherein a concentration of lithium in the shell part is higher than a concentration of lithium in the core part:

[Chemical Formula 1] Li₁₊ₓ₁(Niₐ₁Co_{b1}Mn_{c1})₁₋ₓ₁O₂

wherein in Chemical Formula 1 above, x1, a1, b1 and c1 are real numbers satisfying -0.05 ≤ x1 ≤ 0.2, 0.6 ≤ a1 ≤ 1.0, 0 ≤ b1 ≤ 0.3, and 0 ≤ c1 ≤ 0.4, respectively, and

[Chemical Formula 2] Li₁₋ₓ₂(Niₐ₂CO_{b2}Mn_{c2})₁₊ₓ₂O₂

wherein in Chemical Formula 2 above, x2, a2, b2 and c2 are real numbers satisfying -0.2 ≤ x2 ≤ 0.05, 0.6 ≤ a2 ≤ 1.0, 0 ≤ b2 ≤ 0.3, and 0 ≤ c2 ≤ 0.4, respectively.

In this case, the content of lithium may have a concentration gradient that continuously increases from the core part to a surface of the shell part.

In addition, an oxidation number of nickel in the shell part may be higher than an oxidation number of nickel (Ni) in the core part.

In one example, a d-spacing (d(003)-spacing) for a (003) plane within a lattice of the core part may be larger than a d(003)-spacing of the shell part.

In addition, a primary particle size of the shell part may be larger than a primary particle size of the core part.

One of the several effects of the present disclosure is that it can improve the capacity characteristics of a secondary battery.

One of the several effects of the present disclosure is that it can improve the cycle performance of a secondary battery.

One of the several effects of the present disclosure is that it can increase the stability of the cathode of a secondary battery.

One of the several effects of the present disclosure is that it can reduce the cost in the manufacturing process of the cathode active material of a secondary battery.

However, the various advantageous advantages and effects of the present disclosure are not limited to the above-described contents, and will be more easily understood in the process of explaining specific embodiments of the present disclosure.

### BRIEF DESCRIPTION OF THE DRAWINGS

FIG. 1 is a mimetic diagram for explaining that the core part and shell part are formed to have a lithium concentration gradient in the method for manufacturing a cathode active material according to the present disclosure.
FIG. 2 mimetically shows a process for manufacturing a cathode active material in an embodiment of the present disclosure.
FIG. 3 shows the results of XRD analysis for a cathode active material manufactured in an embodiment.
FIG. 4 shows changes in lattice constant after sintering of a cathode active material manufactured in an embodiment.
FIG. 5 shows changes in lattice volume after sintering of a cathode active material manufactured in an embodiment.
FIG. 6 shows the fraction of impurities generated after sintering of a cathode active material manufactured in an embodiment.
FIG. 7 shows the results of neutron diffraction analysis for an embodiment.
FIG. 8 shows the results of X-ray Absorption Near Edge Structure (XANES) analysis for an embodiment.
FIG. 9 shows the results of Soft X-ray Absorption Spectroscopy (XAS) analysis for an embodiment.
FIG. 10 shows the results of an experiment for a 700°C Target Li = 1.029 sample.
FIG. 11 shows the TXM-XANES analysis results for the above sample.
FIG. 12 shows the TEM-EELS analysis results for the above sample.
FIG. 13A and FIG. 13B show the HR-TEM analysis results of the samples synthesized at 500 cc/min and 100 cc/min at 700°C Target Li = 1.029 composition, respectively.
FIG. 14 shows the electrochemical cycle characteristics of the synthesized cathode active material as the air gas flow rate decreases from 500 cc/min to 100 cc/min in a 700°C Target Li = 1.029 composition.
FIG. 15 shows the electrochemical multiple charge/discharge rate performance comparison for 500 cc/min and 100 cc/min at 700°C Target Li = 1.029 composition.
FIG. 16 shows the electrochemical cycle characteristics of the cathode active material synthesized at 500 cc/min to 100 cc/min at 700°C Target Li = 1.029 composition with impurities removed through the washing process.
FIGS. 17A and 17B show the real-time charge/discharge XRD analysis results for the sample synthesized at 100 cc/min at 700°C Target Li = 1.029 composition and the sample synthesized at 100 cc/min in 750°C Target Li = 1.029 composition, respectively.
FIG. 18 shows the XANES and Soft-XAS analysis results according to the air gas flow rate for the 800 to 750°C Target Li = 1.029 sample.
FIG. 19 shows the electrochemical cycle characteristics according to the air gas flow rate for the 800 to 750°C Target Li = 1.0 to 1.029 sample.
FIG. 20 shows the primary particle size distribution of the cathode active material synthesized at 500 cc/min and 100 cc/min at 700°C Target Li = 1.029 composition.

### DETAILED DESCRIPTION OF THE EMBODIMENTS

Hereinafter, embodiments of the present disclosure will be described with reference to specific embodiments and the attached drawings. It should be understood that this is not intended to limit the technology described in the present specification to specific embodiments, but rather includes various modifications, equivalents and/or alternatives of the embodiments of the present disclosure. In connection with the description of the drawings, similar reference numerals may be used for similar components.

In the present specification, expressions such as "has", "may have", "includes" or "may include" indicate the presence of a corresponding feature (e.g., a component such as a number, function, operation or part), and do not exclude the presence of additional features.

In the present specification, expressions such as "A or B", "at least one of A or/and B" or "one or more of A or/and B" may include all possible combinations of the items listed together. For example, "A or B", "at least one of A and B" or "at least one of A or B" may all refer to cases where (1) at least one of A is included, (2) at least one of B is included, or (3) both at least one of A and at least one of B are included.

The present disclosure relates to a method for manufacturing a cathode active material. The method for manufacturing a cathode active material according to the present disclosure may include step 1 of preparing a mixture of a lithium precursor compound and a metal hydroxide; and step 2 of sintering the mixture to prepare a sintered body.

In this case, the shell part of the sintered body includes a compound represented by Chemical Formula 1 below, and the concentration of lithium in the shell part may be higher than the concentration of lithium in the core part of the sintered body.

[Chemical Formula 1] Li₁₊ₓ₁(Niₐ₁Co_{b1}Mn_{c1})₁₋ₓ₁O₂

In Chemical Formula 1 above, x1, a1, b1 and c1 are real numbers satisfying -0.05 ≤ x1 ≤ 0.2, 0.6 ≤ a1 ≤ 1.0, 0 ≤ b1 ≤ 0.3, and 0 ≤ c1 ≤ 0.4, respectively.

Since Ni-based layered cathode active materials used as cathode active materials for secondary batteries have the characteristics of high energy density and relatively long lifespan, they have the advantage of increasing the reversible capacity of lithium secondary batteries. However, there is a problem in that high-concentration Ni-based (Ni-rich) layered cathode active materials are structurally unstable and difficult to synthesize. In addition, a high oxygen partial pressure is required when manufacturing Ni-rich layered cathode active materials, which increases the manufacturing cost, and an excessively high synthesis temperature may cause Li/O loss on the surface, thereby forming a deteriorated structure such as NiO. In addition, when the content of lithium is insufficient, there is a problem in that a Li-poor structure is formed on the surface, and when it is excessive, a residual lithium compound is formed on the surface, which may cause side reactions and performance degradation.

In contrast, the method for manufacturing a cathode active material according to the present disclosure may manufacture a sintered body having a compound represented by Chemical Formula 1 above as a shell part, and may manufacture a Ni-rich cathode active material with improved stability by having a Li-excess structure in which the concentration of lithium in the shell part is higher than the concentration of lithium in the core part of the sintered body.

In one example, when the method for manufacturing a cathode active material according to the present disclosure has a compound represented by Chemical Formula 1 above as a shell part, the shell part may include lithium layers and transition metal layers. In this case, the lithium layers of the shell part may include a first lithium layer including only lithium and a second lithium layer in which at least a portion of the lithium of the first lithium layer is substituted with a transition metal. The transition metal of the second lithium layer of the shell part may be regularly substituted and arranged within the second lithium layer. In addition, the transition metal layer of the shell part may include a first transition metal layer including only a transition metal, and a second transition metal layer constituted such that at least a portion of the transition metal has excess lithium (x1). The excess lithium (x1) of the second transition metal layer of the shell part may refer to a component corresponding to x1 of aforementioned Chemical Formula 1, and may be arranged to be substituted with the transition metal in the second transition metal layer.

In the case where the shell part of the cathode active material according to the present disclosure has a lithium layer and a transition metal layer as in this example, the shell part may have a structure in which excess lithium is included on the transition metal layer, and the transition metal may include at least one of nickel, cobalt and manganese, and the concentration (a1) of nickel among the transition metals may be 60 mol% or more. In this way, the method for manufacturing a cathode active material according to the present disclosure may have a Li-excess structure in which the concentration of lithium in the shell part is higher than the concentration of lithium in the core part of the sintered body because the shell part may include excess lithium. In addition, since the concentration (a1) of nickel in the transition metal layer of the shell part may be 60 mol% or more, it may be possible to implement a high-concentration Ni-rich layered cathode active material.

In one example of the present disclosure, the compound represented by Chemical Formula 1 above may additionally include one or more compounds selected from the group consisting of aluminum (Al), zirconium (Zr), magnesium (Mg), tungsten (W), tantalum (Ta), niobium (Nb) and ruthenium (Ru), if necessary. When the compound represented by Chemical Formula 1 above includes the above component, the compound represented by Chemical Formula 1 may be represented by Chemical Formula 1-1 below.

[Chemical Formula 1-1] Li₁₊ₓ₁(Niₐ₁Co_{b1}Mn_{c1}Y_{d1})₁₋ₓ₁O₂

In Chemical Formula 1-1 above, Y may mean one or more selected from the group consisting of aluminum (Al), zirconium (Zr), magnesium (Mg), tungsten (W), tantalum (Ta), niobium (Nb) and ruthenium (Ru), and d1 may satisfy 0 ≤ d1 ≤ 0.1.

The method for manufacturing a cathode active material according to the present disclosure may include step 1 of preparing a mixture of a lithium precursor compound and a metal hydroxide. In this case, step 1 may be a step of mixing a metal hydroxide and a lithium precursor compound in a molar ratio of 1:0.9 to 1.5.

The metal hydroxide may be a transition metal hydroxide including nickel, and the transition metal may be, for example, one selected from the group consisting of Co, Mn, Al, Mg and V, but is not limited thereto. In addition, the lithium precursor compound may be LiOH, LiOH • H₂O or Li₂CO₃, but is not limited thereto, and various lithium-containing compounds that are capable of supplying lithium may be used.

In one example, the lithium precursor compound of the method for manufacturing a cathode active material according to the present disclosure may further include one or more molten salts selected from the group consisting of LiNO₃, Li₂SO₄, Li₂CO₃, LiCl, LiI and LiBr. The molten salt may lower the melting point of the lithium precursor compound, thereby inducing rapid lithium diffusion. In addition, when the lithium precursor compound includes the molten salt, a cathode active material having few nano defects and high density may be manufactured.

In this case, the lithium precursor compound of the method for manufacturing a cathode active material according to the present example and the molten salt may be mixed at a molar ratio of 1:0.5 to 2, and more preferably, at a molar ratio of 1:0.9 to 1.5. If it is out of the above range, the eutectic temperature of the molten salt may be exceeded such that sufficient lithium diffusion may not occur.

In one embodiment of the present disclosure, step 2 of the method for manufacturing a cathode active material according to the present disclosure may be performed at a temperature of 600°C or higher and/or 900°C or lower. The sintering temperature may be, for example, 600°C or higher, 610°C or higher, 620°C or higher, 630°C or higher, 640°C or higher, or 650°C or higher, and may be 900°C or lower, 860°C or lower, 820°C or lower, 780°C or lower, or 750°C or lower, but is not limited thereto. When step 2 of the method for manufacturing a cathode active material according to the present embodiment satisfies the above temperature range, a Li-excess Ni-rich cathode active material having a high lithium concentration in the cathode active material may be manufactured, thereby increasing the safety of the manufactured cathode active material. In particular, when step 2 is performed at a temperature of 650°C or higher and 780°C or lower, the stability of the manufactured cathode active material is significantly high, and the initial capacity thereof may be very high and excellent.

In one example, step 2 of the method for manufacturing a cathode active material according to the present disclosure may be performed under an air atmosphere. In the case of conventional Ni-rich cathode active materials, sintering of the active material was performed under a high-concentration oxygen atmosphere to increase the oxidation number of nickel. However, there is a problem in that the manufacturing cost increases due to the usage of a large amount of high-concentration oxygen, and there is a problem in that an excessively high synthesis temperature can cause Li/O loss on the surface, thereby forming a deteriorated structure such as NiO. On the other hand, the method for manufacturing a cathode active material according to the present example may reduce the manufacturing cost by performing sintering at a low synthesis temperature and under an air atmosphere, and may provide a cathode active material having excellent stability and improved electrochemical performance as described below.

In another example, step 2 of the method for manufacturing a cathode active material according to the present disclosure may be performed for 8 hours or more and/or 24 hours or less at an air inflow rate of 600 sccm or less. The above air inflow rate may be, for example, 600 sccm or less, 550 sccm or less, 500 sccm or less, 450 sccm or less, 400 sccm or less, 350 sccm or less, 300 sccm or less, 250 sccm or less, or 200 sccm or less, but is not limited thereto. The lower limit of the above air inflow rate is not particularly limited, and may be, for example, 0 sccm or more or more than 0 sccm. In this case, when the above air inflow rate is 0 sccm or more and 300 sccm or less, the stability of the manufactured cathode active material is significantly high, and the initial capacity thereof may be very high and excellent.

The air may refer to general air including 79% nitrogen (N₂) and 21% oxygen (O₂), or may refer to a gas mixed in a ratio of 10 to 99% oxygen: 90 to 1% nitrogen.

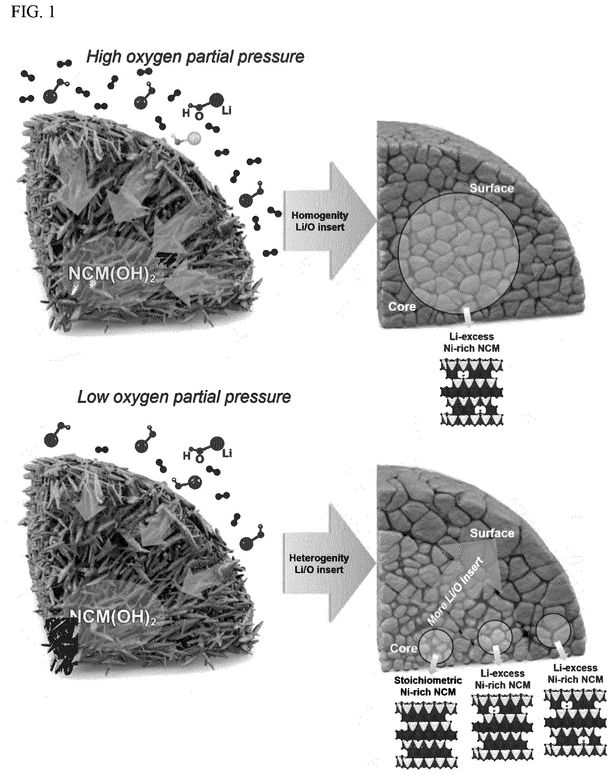

In this case, the oxygen partial pressure of the air may be 2.4 kPa or less. FIG. 1 is a mimetic diagram showing that the core part and shell part are formed to have a lithium concentration gradient in the method for manufacturing a cathode active material according to the present disclosure. Referring to FIG. 1, when the oxygen partial pressure is high, a sufficient amount of lithium is diffused to the core such that the core part and shell part of the cathode active material do not have a lithium concentration gradient. On the other hand, when the oxygen partial pressure is low at a low synthesis temperature, the reaction continues to occur on the surface without sufficient lithium diffusion from the secondary particle surface to the core. As a result, a Li₁₊ₓM₁₋ₓO₂ structure with a relatively high lithium content may be formed on the surface, and a Li₁₋ₓM₁₊ₓO₂ structure with a relatively low lithium content toward the core may be formed (0 ≤ x ≤0.09). Through this, a cathode active material having a lithium concentration gradient may be manufactured.

In one embodiment of the present disclosure, the core part of the sintered body of the method for manufacturing a cathode active material according to the present disclosure may include a compound represented by Chemical Formula 2 below.

[Chemical Formula 2] Li₁₋ₓ₂(Niₐ₂CO_{b2}Mn_{c2})₁₊ₓ₂O₂

In Chemical Formula 2 above, x2, a2, b2 and c2 are real numbers satisfying -0.2 ≤ x2 ≤ 0.05, 0.6 ≤ a2 ≤ 1.0, 0 ≤ b2 ≤ 0.3, and 0 ≤ c2 ≤ 0.4, respectively.

As described above, the sintered body of the method for manufacturing a cathode active material according to the present disclosure may have a shell part having a Li-excess structure containing an excessive amount of lithium. In contrast, the core part of the sintered body may have a lower lithium concentration than the shell part, and may include a compound represented by Chemical Formula 2 above.

In this case, the sintered body of the method for manufacturing a cathode active material according to the present disclosure may have a concentration gradient in which the lithium content continuously increases from the core part to a surface of the shell part. As described above, the sintered body of the method for manufacturing a cathode active material according to the present disclosure may have a structure in which the lithium concentration in the core part is lower than the lithium concentration in the shell part. This structure is formed by external lithium diffusing into the interior of the sintered body during the sintering process. In this case, in the case of conventional manufacturing methods, a lithium-excessive structure with a high lithium concentration in the core part of the sintered body is formed. On the other hand, the method for manufacturing a cathode active material according to the present disclosure may reduce the amount of lithium diffusing into the core part of the sintered body such that a sintered body having a continuous concentration gradient while having a higher lithium content in the shell than in the core may be manufactured.

In one example, when the method for manufacturing a cathode active material according to the present disclosure has a compound represented by Chemical Formula 2 above as a core part, the core part may include lithium layers and transition metal layers. In this case, the lithium layer of the core part may include a first lithium layer including only lithium and a second lithium layer in which at least a portion of the lithium of the first lithium layer is substituted with a transition metal. The transition metal of the second lithium layer of the core part may be regularly substituted and arranged within the second lithium layer. In addition, the transition metal layer of the core part may include a first transition metal layer including only a transition metal, and a second transition metal layer in which at least a portion of the transition metal is substituted with lithium (x2). The lithium (x2) of the second transition metal layer of the core part may refer to a component corresponding to x2 of Chemical Formula 2 described above.

As in this example, when the core part of the cathode active material according to the present disclosure has a lithium layer and a transition metal layer, the core part may have a structure in which lithium is insufficient on the lithium layer and the transition metal is additionally included on the lithium layer, and the transition metal may include at least one of nickel, cobalt and manganese, and the concentration (a2) of nickel among the transition metals may be 60 mol% or more. In this way, the method for manufacturing a cathode active material according to the present disclosure has a structure in which the lithium concentration in the shell part is higher than the lithium concentration in the core part of the sintered body, and at the same time, the nickel concentration (a1) of the transition metal layer in the core part may be 60 mol% or more such that a high-concentration Ni-rich layered cathode active material can be implemented. Since there is no change in the transition metal content in the core part and the shell part and a high nickel concentration (a1 ≥ 0.6) can be implemented evenly in the core part and the shell part, a high capacity may be maintained, and the lithium-rich layered structure in the shell part stabilizes the structure during the overall electrochemical (charge/discharge) reaction such that a high lifespan can be maintained.

In one embodiment of the present disclosure, the compound represented by Chemical Formula 2 above may additionally include one or more compounds selected from the group consisting of aluminum (Al), zirconium (Zr), magnesium (Mg), tungsten (W), tantalum (Ta), niobium (Nb) and ruthenium (Ru), if necessary. When the compound represented by Chemical Formula 1 above includes the above component, the compound represented by Chemical Formula 2 may be represented by Chemical Formula 2-1 below.

[Chemical formula 2-1] Li₁₊ₓ₂(Niₐ₂Co_{b2}Mn_{c2}Y_{d2})₁₋ₓ₂O₂

In Chemical Formula 2-1 above, Y may mean at least one selected from the group consisting of aluminum (Al), zirconium (Zr), magnesium (Mg), tungsten (W), tantalum (Ta), niobium (Nb) and ruthenium (Ru), and d2 may satisfy 0 ≤ d2 ≤ 0.1.

In one example, the sintered body of the method for manufacturing a cathode active material according to the present disclosure may have a higher oxidation number of nickel (Ni) in the shell part than the oxidation number of nickel (Ni) in the core part. There is a problem in that cation mixing occurs in general high-concentration Ni-based (Ni-rich) cathode active materials. Cation mixing is a phenomenon in which divalent nickel ions (Ni²⁺) are introduced into a lithium site, which can reduce the capacity of a secondary battery. On the other hand, the method for manufacturing a cathode active material according to the present disclosure may form a sintered body in which the oxidation number of nickel in the shell part is higher than the oxidation number of nickel (Ni) in the core part, and it may prevent cation mixing by reducing divalent nickel ions (Ni²⁺) by having a Li-excess structure including an excess of lithium.

In addition, the present disclosure relates to a cathode active material. The cathode active material according to the present disclosure includes a shell part represented by Chemical Formula 1 below; and a core part represented by Chemical Formula 2 below, wherein the concentration of lithium in the shell part may be higher than the concentration of lithium in the core part.

[Chemical Formula 1] Li₁₊ₓ₁(Niₐ₁Co_{b1}Mn_{c1})₁₋ₓ₁O₂

In Chemical Formula 1 above, x1, a1, b1 and c1 are real numbers satisfying -0.05 ≤ x1 ≤ 0.2, 0.6 ≤ a1 ≤ 1.0, 0 ≤ b1 ≤ 0.3, and 0 ≤ c1 ≤ 0.4, respectively.

[Chemical Formula 2] Li₁₋ₓ₂(Niₐ₂CO_{b2}Mn_{c2})₁₊ₓ₂O₂

In Chemical Formula 2 above, x2, a2, b2 and c2 are real numbers satisfying -0.2 ≤ x2 ≤ 0.05, 0.6 ≤ a2 ≤ 1.0, 0 ≤ b2 ≤ 0.3, and 0 ≤ c2 ≤ 0.4, respectively.

In this case, the sintered body of the cathode active material according to the present disclosure may have a concentration gradient in which the lithium content continuously increases from the core part to a surface of the shell part.

Meanwhile, in the sintered body of the cathode active material according to the present disclosure, the oxidation number of nickel in the shell part may be higher than the oxidation number of nickel (Ni) in the core part.

In one example, the d-spacing (d(003)-spacing) of the core part of the sintered body of the cathode active material according to the present disclosure for the (003) plane in the lattice may be larger than the d(003)-spacing of the shell part. The d-spacing may refer to a distance between planes in the lattice, and may be confirmed through XRD analysis. As in this example, when the d-spacing (d(003)-spacing) of the core part of the sintered body of the cathode active material for the (003) plane in the lattice is larger than the d(003)-spacing of the shell part, a high-capacity secondary battery may be implemented, and the lithium-excessive layered structure of the shell part may stabilize the structure during the overall electrochemical (charge/discharge) reaction, thereby maintaining a high lifespan.

In addition, the shell part and the core part of the sintered body of the cathode active material according to the present disclosure may each include primary particles, and the primary particle size of the shell part may be larger than the primary particle size of the core part. The size of the above primary particles may refer to the average particle size of the primary particles. In this way, when the size of the primary particles of the shell part is larger than the size of the primary particles of the core part, the mechanical strength of the sintered body may be improved, and the contact area with the electrolyte in the shell part may be reduced to suppress side reactions during charge/discharge, thereby improving the lifespan.

Since the content of the sintered body of the above cathode active material and the like is the same as described above, it will be omitted.

Hereinafter, preferred examples are presented to help understand the present disclosure. However, the following examples are provided only to more easily understand the present disclosure, and the content of the present disclosure is not limited by the following examples.

### Example 1: Manufacture of cathode active material

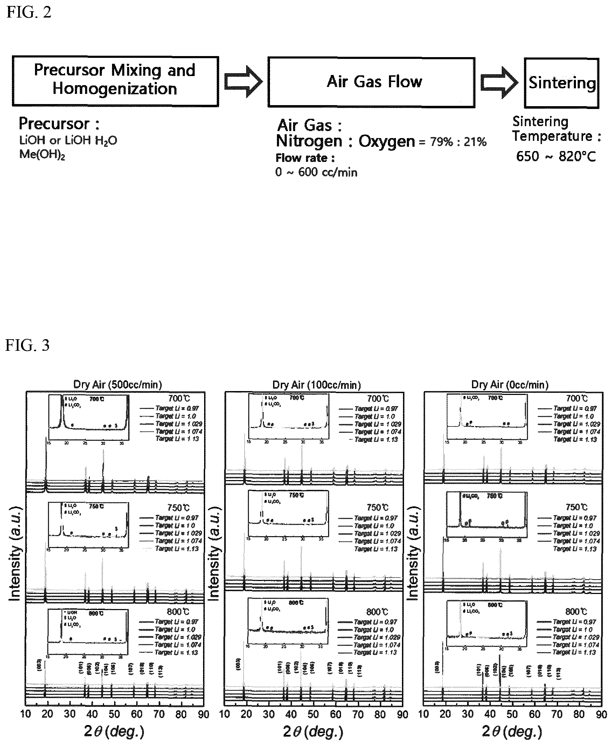

The cathode active material according to the present disclosure was manufactured through the process illustrated in FIG. 2. In order to manufacture the cathode active material according to the present disclosure, a mixed sample of Ni_{0.92}Co_{0.03}Mn_{0.05}(OH)₂ + LiOH • H₂O precursor was prepared. In this case, the precursor mixture was sintered for 12 hours at a final synthesis temperature of 700 to 800°C under the conditions of a molar ratio of a transition metal compound: lithium compound = 1: 0.97 to 1.30 and a gas atmosphere of 100 mL/min Air, so as to synthesize a final cathode active material LiₓMe₂₋ₓO₂ (x = 0.97, 1.0, 1.029, 1.074, 1.13).

### Examples 2 and 3: Manufacture of cathode active materials

Except for changing the gas atmosphere to 0 mL/min and 250 mL/min Air during sintering, the cathode active materials were manufactured in the same manner as in Example 1.

### Examples 4 and 5: Manufacture of cathode active materials

The cathode active materials were manufactured by adding the conditions of a gas atmosphere of 350 mL/min and 500 mL/min Air during sintering.

**[Table 1]**

| | **500cc/min** | **350cc/min** | **250cc/min** | **100cc/min** | **0cc/min** |
|---|---|---|---|---|---|
| **800°C** | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 |
| **750°C** | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 |
| **700°C** | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 | Me(OH)₂:LiOHH₂O = 1:0.94, 1.0, 1.06, 1.16, 1.3 |

Table 1 above summarizes the precursor mixture sample ratio, gas atmosphere and synthesis temperature conditions manufactured in the examples.

### Experimental Example 1: X-ray diffraction (XRD) pattern

FIG. 3 shows the XRD analysis results for the cathode active material manufactured in the examples. As shown in FIG. 3, after synthesis under each condition of the precursor mixture, the conditions for the formation of layered structures and impurities under each synthesis condition were confirmed through the X-ray diffraction (XRD) pattern. It was qualitatively confirmed that the impurity content increased due to an increase in lithium compounds as the air gas inflow rate decreased from 500 cc/min to 0 cc/min and as the synthesis temperature increased.

### Experimental Example 2: Rietveld structure analysis of X-ray diffraction (XRD) pattern

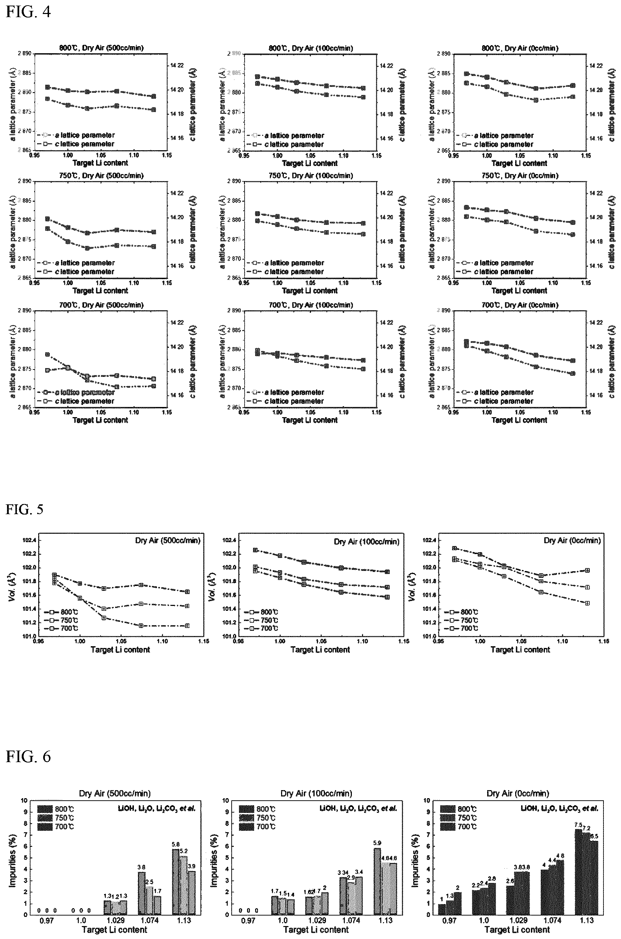

FIG. 4 shows changes in lattice constant after sintering of the cathode active material manufactured in the examples, FIG. 5 shows changes in lattice volume of the examples, and FIG. 6 shows the fraction of impurities generated in the examples. The changes in lattice constant, changes in lattice volume and impurity generation phase fraction were confirmed through X-ray diffraction (XRD) pattern Rietveld analysis. As the synthesis temperature was higher and the air gas inflow rate was slower, the overall lattice constant increased. In addition, regardless of the conditions, the increase in lithium content led to a decrease in the lattice constant.

This is because the lithium included in the layered crystal structure increases as the lithium compound increases under all synthesis conditions, which indirectly confirms that this leads to an increase in the oxidation number of the transition metal. In addition, the residual lithium compound (LiOH, Li₂O, Li₂CO₃, etc.) increased by up to 7.5% as the air gas inflow rate decreased and the synthesis temperature increased, which shows a characteristic that lithium is difficult to contain in the structure due to insufficient oxygen and high synthesis temperature.

### Experimental Example 3: Neutron diffraction pattern Rietveld analysis

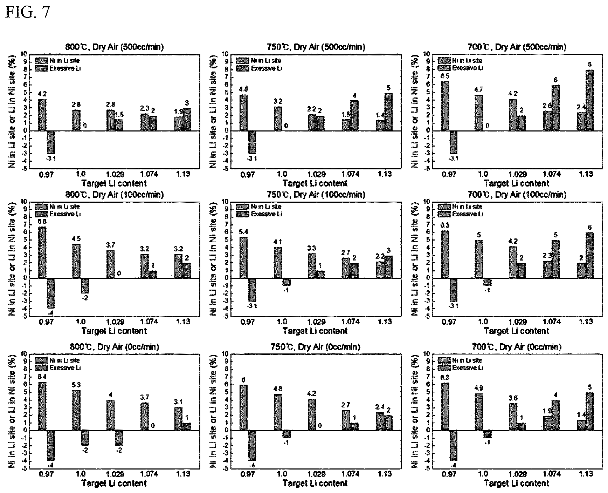

In order to quantify the lithium content according to each synthesis condition, neutron diffraction analysis was performed. FIG. 7 shows the results of neutron diffraction analysis for the examples. Referring to FIG. 7, it can be seen that as the synthesis temperature decreased from 500 cc/min of air gas to 700°C, excess lithium could be contained up to 8%. However, as the rate of air gas inflow decreases, the oxygen required for the reaction between the transition metal precursor (Me(OH)₂) and the lithium compound becomes insufficient, and thus, it becomes difficult to contain excess lithium in the structure, and it could be confirmed that the excess lithium decreased up to 5%.

In addition, when the synthesis temperature increases excessively from 500 cc/min of air gas to 800°C, excess lithium can be contained up to only 3%, and when the air gas inflow decreases to 0 cc/min, excess lithium cannot be contained more than 1%. In addition, it was confirmed that under the synthesis conditions with excess lithium, the cation mixing ratio can be reduced due to a decrease in Ni²⁺.

### Experimental Example 4: XANES Analysis

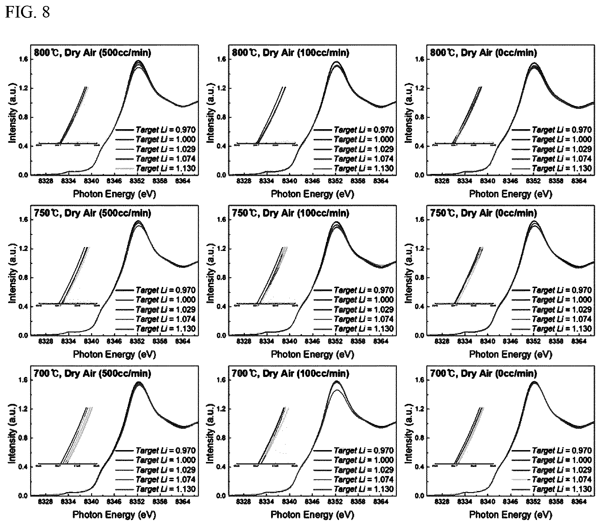

FIG. 8 shows the results of X-ray Absorption Near Edge Structure (XANES) analysis for the examples. The change in Ni oxidation number of the bulk structure representing the entire secondary particle according to the content of excess lithium as shown in Experimental Example 3 was confirmed through X-ray XANES analysis. Referring to FIG. 8, as the air gas increased from low to high flow rate and the synthesis temperature decreased, the oxidation number of Ni increased more significantly due to an increase in lithium amount, which means that the content of excess lithium contained in the structure in Experimental Example 3 increased more as it approached the above conditions.

### Experimental Example 5: XAS Analysis

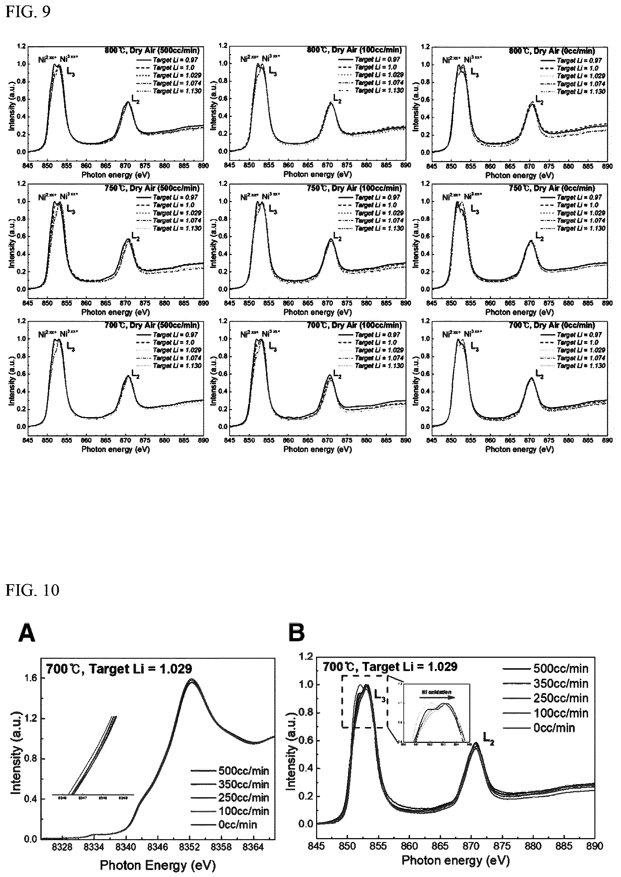

FIG. 9 shows the results of Soft X-ray Absorption Spectroscopy (XAS) analysis for the examples. The change in Ni oxidation number of the average surface structure of the secondary particle according to the content of excess lithium as shown in Experimental Example 3 was confirmed through Soft X-ray XAS analysis. Referring to FIG. 9, as in Experimental Example 4, as the air gas increased from low to high flow rate and the synthesis temperature decreased, the oxidation number of Ni increased more significantly due to an increase in lithium amount. This means that the content of excess lithium contained in the structure in Experimental Example 3 increased further as it approached the above conditions.

### Experimental Example 6: Comparative analysis of secondary particle surface and bulk oxidation numbers according to the air gas flow rate of the 700°C, Target Li = 1.029 Sample

FIG. 10 shows the experimental results for the 700°C Target Li = 1.029 sample. FIG. 10A shows the Ni oxidation number of the entire bulk structure of the secondary particles analyzed through XANES analysis, and FIG. 10B shows the change in Ni oxidation number of the secondary particle surface structure analyzed through Soft XAS analysis. Referring to FIG. 10A, it can be confirmed that the Ni oxidation number of the bulk structure decreased as the air gas flow rate increased. On the other hand, referring to FIG. 10B, the Ni oxidation number of the surface structure gradually increased while the air gas flow rate decreased from 500 cc/min to 100 cc/min, except for 0 cc/min. In particular, it was confirmed that the Ni oxidation number of the surface structure was the highest at 100 cc/min.

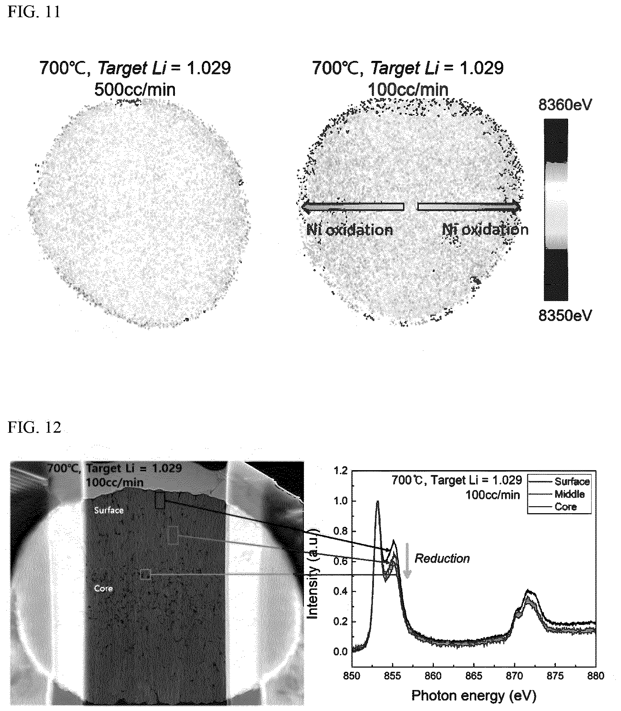

FIG. 11 shows the results of the Transmission X-ray Microscopy (TXM)-XANES analysis for the sample, and FIG. 12 shows the results of the Transmission Electron Microscope (TEM)-Electron Energy Loss Spectra (EELS) analysis for the sample. Referring to FIGS. 11 and 12, in the case of the 700°C, Target Li = 1.029 sample, it can be confirmed that the Ni of the surface structure was more oxidized at 100 cc/min and a structure that was more reduced was formed as it went toward the core. This is a result that is in contrast to the fact that the entire bulk structure has the same Ni oxidation number when the air gas flow rate is very fast at 500 cc/min. The difference in Ni oxidation number between the surface and core structures means that the distribution of lithium in excess in the transition metal layer is different, and therefore, in the sample synthesized at 700°C, Target Li = 1.029 and 100cc/min, the surface structure was more lithium-excessive, and the lithium concentration gradient secondary particle formation that approached the stoichiometric composition as it went toward the core is shown.

### Experimental Example 7: Comparative analysis of d-spacing of (003) plane from the secondary particle core to the surface according to the air gas flow rate of the 700°C Target Li = 1.029 sample

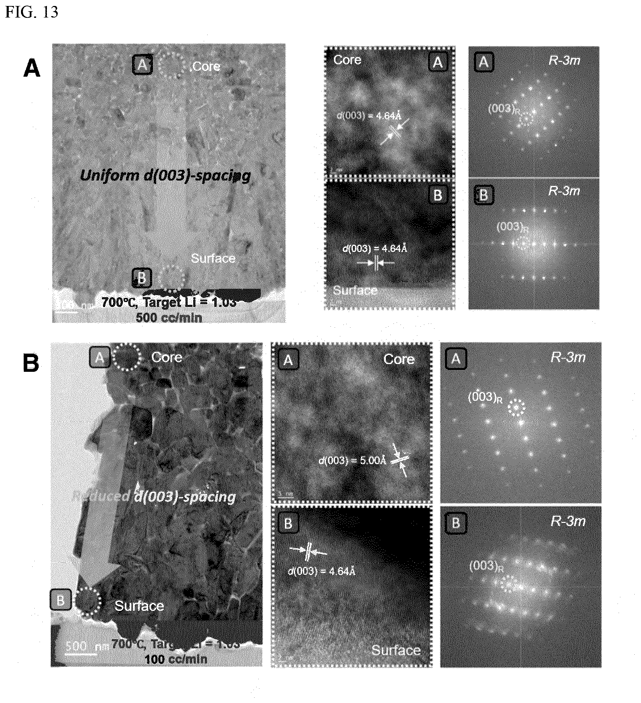

FIGS. 13A and 13B show the results of high-resolution (HR)-TEM analysis of the 700°C Target Li = 1.029 sample at ambient gas flow rates of 500 cc/min and 100 cc/min, respectively. Referring to FIGS. 13A and 13B, the sample synthesized at an air gas flow rate of 500 cc/min had a d-spacing (d(003)-spacing) of about 4.64 Å in the (003) plane from the secondary particle core to the surface, whereas the sample synthesized at an air gas flow rate of 100 cc/min had a d-spacing difference of about 5.00 Å in the core and about 4.64 Å on the surface. This is consistent with the difference in oxidation number shown in FIG. 10, 11, and 12, and in other words, it is a result that is consistent with the fact that the Ni oxidation number increases gradually from the core to the surface when the air gas flow rate is 100 cc/min at 700°C Target Li = 1.029.

### Experimental Example 8: Comparison of electrochemical performance as the air gas flow rate decreases from 500 cc/min to 100 cc/min at 700°C, Target Li = 1.029 composition

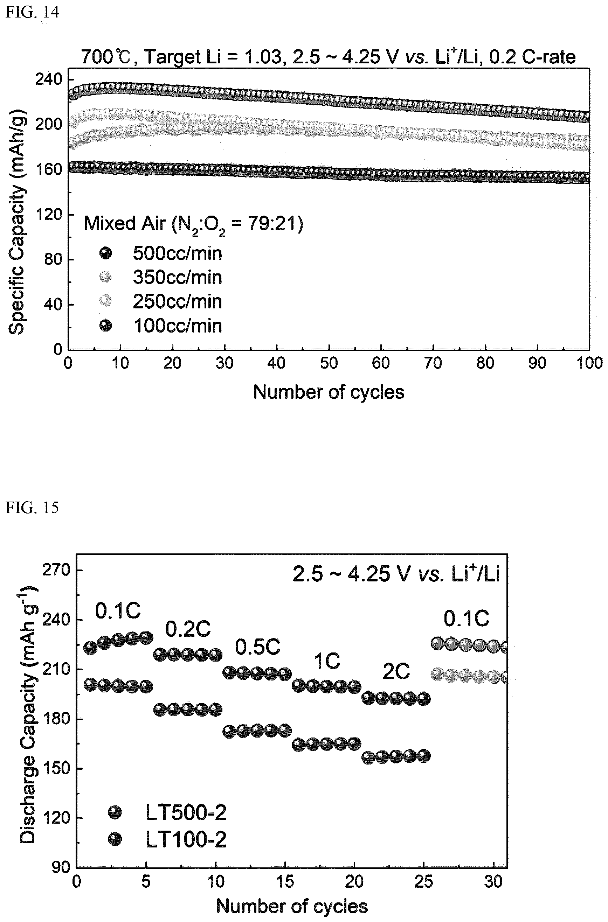

FIG. 14 and Table 2 show the electrochemical cycle characteristics of the synthesized cathode active material as the air gas flow rate decreases from 500 cc/min to 100 cc/min in a 700°C, a Target Li = 1.029 composition. Referring to FIG. 14 and Table 2, the sample synthesized at 700°C, Target Li = 1.029 composition and 100cc/min, where lithium concentration gradient secondary particles were formed, had the highest initial capacity of 227mAh/g and also showed excellent cycle characteristics.

### Experimental Example 9: Comparison of electrochemical charge/discharge rate performances as the air gas flow rate decreases of 500cc/min and 100cc/min at 700°C Target Li = 1.029 composition

FIG. 15 shows the comparison of electrochemical multiple charge/discharge rate performances for 500cc/min and 100cc/min at 700°C Target Li = 1.029 composition. When it was charged/discharged for 5 cycles each from 0.1 C-rate to 0.2 C, 0.5 C, 1 C and 2 C-rate and then again at 0.1 C-rate, the sample synthesized at 500 cc/min showed a capacity ratio of approximately 76%, whereas the sample synthesized at 100 cc/min showed excellent discharge capacity and rate performance with a capacity ratio of approximately 85%. The excellent rate performance at 100 cc/min implies that the lithium mobility was enhanced by the relatively wide d(003)-spacing of the core.

**[Table 2]**

| 0.2 C-rate | 500cc/min | 350cc/min | 250cc/min | 100cc/min |
|---|---|---|---|---|
| Capacity (mAh g⁻¹) of 1st cycle | 162.5 | 182.86 | 201.52 | 226.73 |
| Capacity (mAh g⁻¹) of 100th cycle | 152.6 | 185.02 | 180.89 | 206.74 |
| Capacity retention (%) | 93.90 | 101.18 | 89.76 | 91.18 |

### Experimental Example 10: Comparison of electrochemical performance as the air gas flow rate decreases from 500 cc/min to 100 cc/min at Washed 700°C, Target Li = 1.029 composition

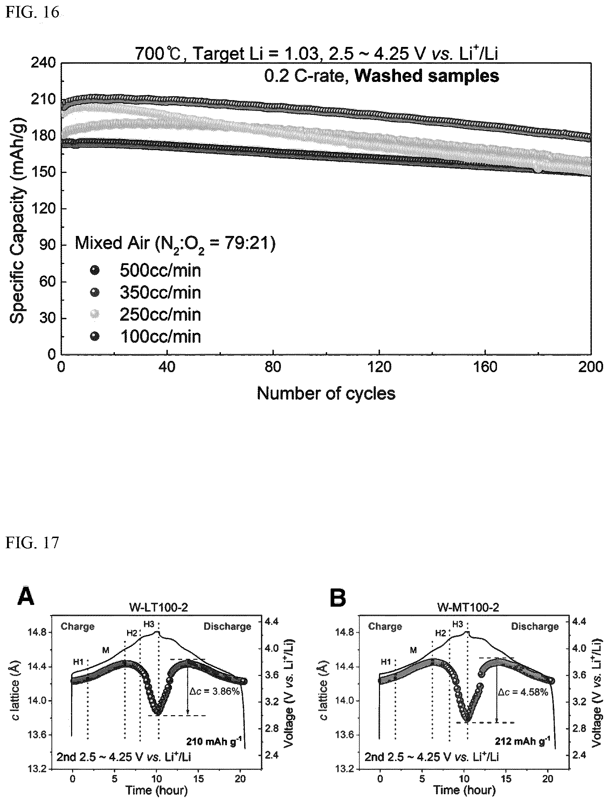

FIG. 16 and Table 3 show the electrochemical cycle characteristics of the cathode active materials synthesized at 500 cc/min to 100 cc/min at 700°C, Target Li = 1.029 composition, from which impurities were removed through a washing process. In the sample from which impurities were removed, the sample synthesized at 700°C, Target Li = 1.029 composition and 100 cc/min, in which lithium concentration gradient secondary particles were formed, showed the most stable cycle characteristics with 204 mAh/g.

**[Table 3]**

| 0.2 C-rate (Washed samples) | 500cc/min | 350cc/min | 250cc/min | 100cc/min |
|---|---|---|---|---|
| Capacity (mAh g⁻¹) of 1st cycle | 173.74 | 180.8 | 198.65 | 204.37 |
| Capacity (mAh g⁻¹) of 200th cycle | 150.20 | 158.82 | 151.09 | 178.28 |
| Capacity retention (%) | 86.45 | 87.84 | 76.06 | 87.23 |

### Experimental Example 11: Real-time charge/discharge XRD analysis comparison

FIGS. 17A and 17B show the results of real-time charge/discharge XRD analysis for the sample synthesized at 700°C, Target Li = 1.029 composition at 100 cc/min and the sample synthesized at 750°C, Target Li = 1.029 composition at 100 cc/min, respectively. Referring to FIGS. 17A and 17B, the sample synthesized at 700°C, Target Li = 1.029 composition at 100 cc/min showed the largest capacity as shown in FIGS. 13 and 14, but it was confirmed that the change in the lattice constant c-axis was 0.72% less than that of the sample synthesized at 750°C, Target Li = 1.029 composition at 100 cc/min, which showed a similar capacity. This proves that the material with lithium concentration gradient secondary particles has excellent electrochemical properties.

### Experimental Example 12: Comparison of changes in bulk and surface oxidation numbers of secondary particles according to air gas flow rate for 800 to 750°C, Target Li = 1.029 Samples

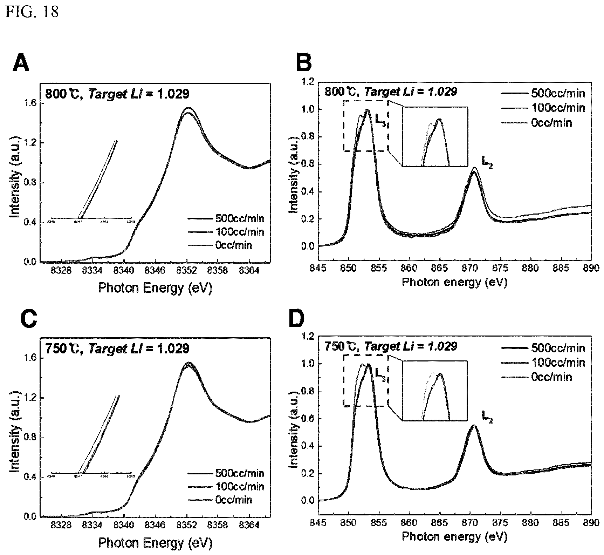

FIG. 18 shows the results of XANES and Soft-XAS analysis according to the air gas flow rate for 800 to 750°C, Target Li = 1.029 samples. FIGS. 18A and 18B show the bulk oxidation number and surface oxidation number, respectively, for 800°C, Target Li = 1.029 samples, and FIGS. 18C and 18D show the bulk oxidation number and surface oxidation number, respectively, for 750°C, Target Li = 1.029 samples. Referring to FIG. 18, unlike the opposite trends of surface and bulk Ni oxidation numbers according to a decrease in air gas flow rate for the 700°C, Target Li = 1.029 sample, it was confirmed that as the synthesis temperature increased to 750 to 800°C, the changes in surface and bulk Ni oxidation numbers according to the decrease in air gas flow rate followed a similar trend, and as a result, it was confirmed that the oxidation number decrease trends according to the decrease in air gas flow rate for the surface and bulk were consistent at the 800°C synthesis temperature.

### Experimental Example 13: Comparison of electrochemical performance according to air gas flow rate for 800°C and 750°C, Target Li = 1.0 and 1.029 samples

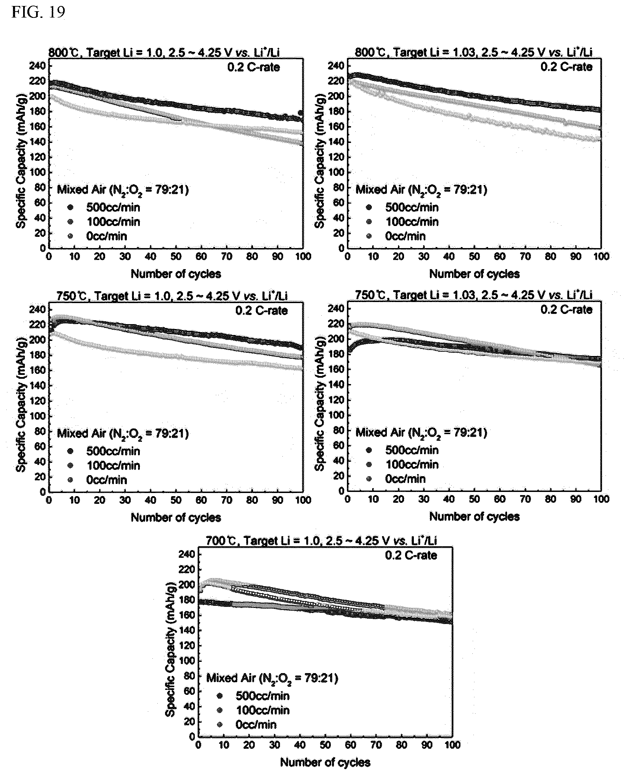

FIG. 19 and Tables 4 to 8 show the electrochemical cycle characteristics according to air gas flow rate for the 800 to 750°C, Target Li = 1.0~1.029 samples. Referring to FIG. 19 and Tables 4 to 8, at a temperature of 750°C, as at 700°C, the initial capacity increased as the gas flow rate decreased from 500 cc/min to 100 cc/min, but the cycle characteristics decreased. At a high temperature of 800°C, both of the initial capacity and the cycle characteristics decreased as the gas flow rate decreased. This proves that the most ideal lithium concentration gradient secondary particles were formed under the low gas flow rate conditions of 700°C.

**[Table 4]**

| 800°C, Target Li = 1.0, 0.2 C-rate | 500cc/min | 100cc/min | 0cc/min |
|---|---|---|---|
| Capacity (mAh g⁻¹) of 1st cycle | 216.19 | 211.83 | 185.22 |
| Capacity (mAh g⁻¹) of 100th cycle | 168.72 | 137.58 | 122.56 |
| Capacity retention (%) | 78.04 | 64.95 | 66.17 |

**[Table 5]**

| 800°C, Target Li = 1.03, 0.2 C-rate | 500cc/min | 100cc/min | 0cc/min |
|---|---|---|---|
| Capacity (mAh g⁻¹) of 1st cycle | 226.00 | 218.09 | 217.52 |
| Capacity (mAh g⁻¹) of 100th cycle | 181.49 | 157.40 | 143.27 |
| Capacity retention (%) | 80.30 | 72.17 | 65.87 |

**[Table 6]**

| 750°C, Target Li = 1.0, 0.2 C-rate | 500cc/min | 100cc/min | 0cc/min |
|---|---|---|---|
| Capacity (mAh g⁻¹) of 1st cycle | 212.86 | 225.57 | 207.54 |
| Capacity (mAh g⁻¹) of 100th cycle | 190.18 | 176.69 | 161.77 |
| Capacity retention (%) | 89.34 | 78.33 | 77.95 |

**[Table 7]**

| 750°C, Target Li = 1.03, 0.2 C-rate | 500cc/min | 100cc/min | 0cc/min |
|---|---|---|---|
| Capacity (mAh g⁻¹) of 1st cycle | 185.81 | 215.90 | 209.72 |
| Capacity (mAh g⁻¹) of 100th cycle | 173.67 | 164.78 | 168.26 |
| Capacity retention (%) | 93.47 | 76.32 | 80.23 |

**[Table 8]**

| 700°C, Target Li = 1.0, 0.2 C-rate | 500cc/min | 100cc/min | 0cc/min |
|---|---|---|---|
| Capacity (mAh g-1) of 1st cycle | 177.77 | 205.34 | 205.75 |
| Capacity (mAh g-1) of 100th cycle | 151.40 | 182.87 | 163.92 |
| Capacity retention (%) | 85.17 | 89.06 | 79.66 |

### Experimental Example 14: Comparison of particle sizes of cathode active materials synthesized at 500 cc/min and 100 cc/min at 700°C Target Li = 1.029 composition

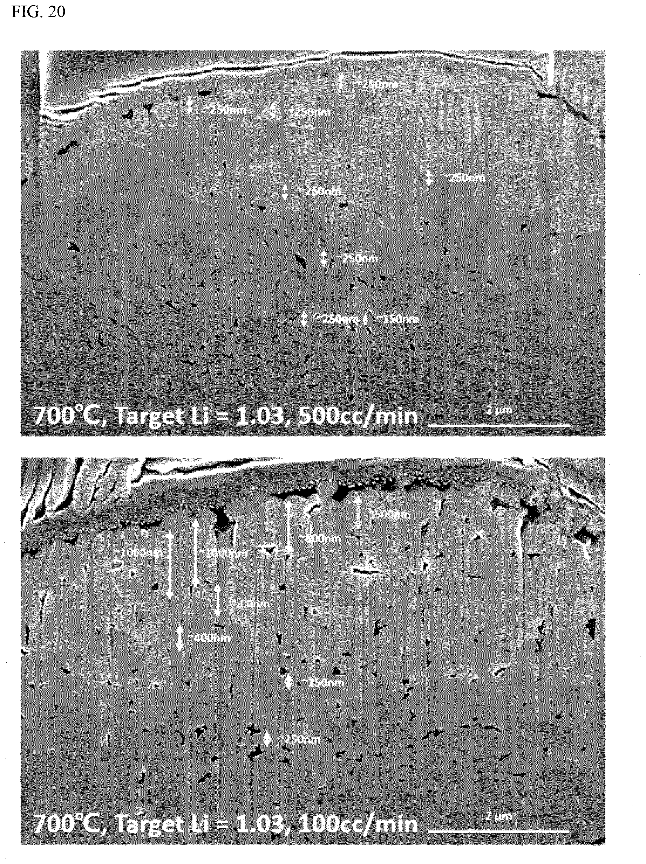

FIG. 20 shows the particle size distribution of cathode active materials synthesized at 500 cc/min and 100 cc/min at 700°C Target Li = 1.029 composition. In the case of cathode active material synthesized at a gas flow rate of 500 cc/min, it can be confirmed that the primary particle size was uniform at 200 to 300 nm from the shell to the core, but in the case of cathode active material synthesized at 100 cc/min, it was confirmed that the shell particle size was 500 to 1,000 nm, which is larger than the core part. This shows that the structure of the shell part was significantly crystallized due to an excess of lithium compared to the core part. The increase in the size of the primary particle in the shell part of the secondary particle means that the interface exposure of the cathode active material to the electrolyte may be reduced, and the side reaction at the interface according to the electrochemical cycle may be reduced, thereby contributing to the improvement of the lifespan.

Although the embodiments of the present disclosure have been described in detail above, the present disclosure is not limited by the above-described embodiments and the attached drawings, but is intended to be limited by the attached claims. Accordingly, various forms of substitution, modification and change are possible by those skilled in the art within the scope that does not depart from the technical idea of the present disclosure described in the claims, and it will be said that they are also within the scope of the present disclosure.

## Claims

1. A method for manufacturing a cathode active material, the method comprising:
step 1 of preparing a mixture of a lithium precursor compound and a metal hydroxide; and
step 2 of sintering the mixture to prepare a sintered body,
wherein a shell part of the sintered body comprises a compound represented by Chemical Formula 1 below, and
wherein a concentration of lithium in the shell part is higher than a concentration of lithium in a core part of the sintered body:
[Chemical Formula 1] Li₁₊ₓ₁(Niₐ₁Co_{b1}Mn_{c1})₁₋ₓ₁O₂
wherein in Chemical Formula 1 above, x1, a1, b1 and c1 are real numbers satisfying -0.05 ≤ x1 ≤ 0.2, 0.6 ≤ a1 ≤ 1.0, 0 ≤ b1 ≤ 0.3, and 0 ≤ c1 ≤ 0.4, respectively.

2. The method of claim 1, wherein step 1 is a step of mixing a metal hydroxide and a lithium precursor compound in a molar ratio of 1:0.9 to 1.5, and
wherein the lithium precursor compound further comprises one or more molten salts selected from the group consisting of LiNO₃, Li₂SO₄, Li₂CO₃, LiCl, LiI and LiBr.

3. The method of claim 1, wherein step 2 is performed at a temperature of 600°C or higher and 900°C or lower.

4. The method of claim 1, wherein step 2 is performed at a temperature of 650°C or higher and 780°C or lower.

5. The method of claim 1, wherein step 2 is performed under an air atmosphere.

6. The method of claim 5, wherein step 2 is performed for 8 hours or more and 24 hours or less at an air inflow rate of 0 sccm or more and 600 sccm or less.

7. The method of claim 5, wherein step 2 is performed for 8 hours or more and 24 hours or less at an air inflow rate of 0 sccm or more and 300 sccm or less.

8. The method of claim 1, wherein the core part of the sintered body comprises a compound represented by Chemical Formula 2 below:
[Chemical Formula 2] Li₁₋ₓ₂(Niₐ₂Co_{b2}Mn_{c2})₁₊ₓ₂O₂
wherein in Chemical Formula 2 above, x2, a2, b2 and c2 are real numbers satisfying -0.2 ≤ x2 ≤ 0.05, 0.6 ≤ a2 ≤ 1.0, 0 ≤ b2 ≤ 0.3, and 0 ≤ c2 ≤ 0.4, respectively.

9. The method of claim 1, wherein the content of lithium has a concentration gradient that continuously increases from the core part of the sintered body to a surface of the shell part.

10. The method of claim 1, wherein an oxidation number of nickel in the shell part is higher than an oxidation number of nickel (Ni) in the core part of the sintered body.

11. A cathode active material, comprising:
a shell part represented by Chemical Formula 1 below; and
a core part represented by Chemical Formula 2 below,
wherein a concentration of lithium in the shell part is higher than a concentration of lithium in the core part:
[Chemical Formula 1] Li₁₊ₓ₁(Niₐ₁Co_{b1}Mn_{c1})₁₋ₓ₁O₂
wherein in Chemical Formula 1 above, x1, a1, b1 and c1 are real numbers satisfying -0.05 ≤ x1 ≤ 0.2, 0.6 ≤ a1 ≤ 1.0, 0 ≤ b1 ≤ 0.3, and 0 ≤ c1 ≤ 0.4, respectively, and
[Chemical Formula 2] Li₁₋ₓ₂(Niₐ₂CO_{b2}Mn_{c2})₁₊ₓ₂O₂
wherein in Chemical Formula 2 above, x2, a2, b2 and c2 are real numbers satisfying -0.2 ≤ x2 ≤ 0.05, 0.6 ≤ a2 ≤ 1.0, 0 ≤ b2 ≤ 0.3, and 0 ≤ c2 ≤ 0.4, respectively.

12. The cathode active material of claim 11, wherein the content of lithium has a concentration gradient that continuously increases from the core part to a surface of the shell part.

13. The cathode active material of claim 11, wherein an oxidation number of nickel in the shell part is higher than an oxidation number of nickel (Ni) in the core part.

14. The cathode active material of claim 11, wherein a d-spacing (d(003)-spacing) for a (003) plane within a lattice of the core part is larger than a d(003)-spacing of the shell part.

15. The cathode active material of claim 11, wherein a primary particle size of the shell part is larger than a primary particle size of the core part.
